(19) **Europäisches Patentamt**

**European Patent Office**

**Office européen des brevets**

(11) **EP 0 916 076 B1**

(12) **EUROPÄISCHE PATENTSCHRIFT**

(45) Veröffentlichungstag und Bekanntmachung des Hinweises auf die Patenterteilung:
**04.06.2003  Patentblatt 2003/23**

(51) Int Cl.[7]: **G01D 5/20**, G01D 3/036

(21) Anmeldenummer: **97936590.5**

(86) Internationale Anmeldenummer:
**PCT/DE97/01640**

(22) Anmeldetag: **04.08.1997**

(87) Internationale Veröffentlichungsnummer:
**WO 98/005929 (12.02.1998 Gazette 1998/06)**

(54) **WIRBELSTROMSENSOR**

EDDY CURRENT SENSOR

CAPTEURS DE COURANTS DE FOUCAULT

(84) Benannte Vertragsstaaten:
**DE FR GB**

(30) Priorität: **03.08.1996  DE 19631438**

(43) Veröffentlichungstag der Anmeldung:
**19.05.1999  Patentblatt 1999/20**

(73) Patentinhaber: **Micro-Epsilon Messtechnik GmbH & Co. KG**
**94496 Ortenburg (DE)**

(72) Erfinder:
- **MANDL, Roland**
  **D-94496 Ortenburg (DE)**
- **MEDNIKOV, Felix**
  **Samara, 443096 (RU)**
- **NETSCHAEWSKY, Mark**
  **Samara, 443011 (RU)**
- **WISSPEINTNER, Karl**
  **D-94496 Ortenburg (DE)**

(74) Vertreter: **Naumann, Ulrich, Dr.-Ing. et al**
**Patentanwälte,**
**Ullrich & Naumann,**
**Luisenstrasse 14**
**69115 Heidelberg (DE)**

(56) Entgegenhaltungen:
EP-A- 0 399 694          GB-A- 2 287 341
US-A- 4 893 079          US-A- 4 915 072
US-A- 5 541 510

**Beschreibung**

Die Erfindung betrifft einen Wirbelstromsensor mit mindestens einer mit Wechselstrom beaufschlagbaren Meßspule und mit einer Auswerteschaltung.

Wirbelstromsensoren der in Rede stehenden Art können bspw. zur Abstandsmessung eingesetzt werden oder auch zur Bestimmung der Leitfähigkeit eines Meßobjekts. Je nach Material und Beschaffenheit des Meßobjekts können mit einem Wirbelstromsensor auch andere Eigenschaften der Oberflächenschicht des Meßobjekts erfaßt werden, wie z.B. die Beschichtungsdicke. Ein weiteres Einsatzgebiet für einen Wirbelstromsensor stellt die Dickenbestimmung von dünnen Folien dar.

Wirbelstromsensoren werden häufig im industriellen Umfeld eingesetzt, da sie sich auch für Messungen unter problematischen Umgebungsbedingungen eignen, wie bspw. bei Anwesenheit starker Magnetfelder, bei hohen Temperaturen und bei einem relativ hohen Verschmutzungsgrad. Starke Temperaturschwankungen wirken sich allerdings auch auf Messungen mit Wirbelstromsensoren aus. Die vorliegende Erfindung beschäftigt sich nun mit der Kompensation derartiger Temperatureinflüsse auf die mit Hilfe eines Wirbelstromsensors ermittelten Meßgrößen.

US 4 915 072 (CARON) offenbart ein Wirbelstromsensor.

US 5 541 510 (DANIELSON) offenbart ein Verfahren zum Betreiber eines Wirbelstromsensors.

Temperaturschwankungen wirken sich in zweierlei Hinsicht auf die Meßergebnisse eines Wirbelstromsensors aus. Zum einen verändert sich die komplexe Impedanz der Meßspule, und zwar insbesondere der Realteile der komplexen Impedanz. Daneben ist aber auch eine geringe Temperaturabhängigkeit des Imaginärteils der komplexen Impedanz feststellbar. Zum anderen verändert sich mit der Temperatur auch die Leitfähigkeit des Meßobjekts bzw. des Meßobjektmaterials. In bestimmten Temperaturbereichen besteht ein nahezu linearer Zusammenhang zwischen der Temperatur des Meßobjekts und dessen Leitfähigkeit. Da sich die Leitfähigkeit des Meßobjektmaterials auf die über die Meßspule im Material induzierten Wirbelströme auswirkt, beeinflußt die Leitfähigkeit des Meßobjektmaterials über die Rückwirkung der Kopplung wiederum die Meßspule bzw. deren Impedanz. Eine vollständige Kompensation der Temperatureinflüsse auf die Meßgrößen ist daher nur möglich, wenn beide Effekte kompensiert werden, d.h. sowohl der Temperatureinfluß auf die Impedanz der Meßspule als auch der Temperatureinfluß auf die Leitfähigkeit des Meßobjektmaterials.

Aus der internationalen Patentanmeldung PCT/DE 93/00703, Veröffentlichung WO 94/03778, ist ein Verfahren zur Kompensation von Temperatureinflüssen auf das Ausgangssignal einer Meßspule bekannt, bei dem der die Meßspule speisenden Wechselspannung eine Gleichspannung überlagert wird. Die Wechselstromkomponente des Ausgangssignals der Meßspule wird sowohl durch das Meßobjekt beeinflußt als auch durch Temperatureinflüsse. Im Gegensatz dazu unterliegt die Gleichspannungskomponente des Ausgangssignals lediglich den Temperatureinflüssen, so daß die Temperatureinflüsse über die Gleichspannungskomponente isoliert ermittelt werden können und somit bei der Auswertung der Wechselspannungskomponente des Ausgangssignals berücksichtigt und kompensiert werden können.

Bei dem bekannten Verfahren wird mit Hilfe der Gleichspannungskomponente des Ausgangssignals der Meßspule also lediglich der Temperatureinfluß auf den Realteil der Meßspulenimpedanz kompensiert. Ein etwaiger Temperatureinfluß auf den Imaginärteil der Meßspulenimpedanz kann so nicht eliminiert werden. Der Temperatureinfluß auf das Ausgangssignal der Meßspule, der auf eine Temperaturabhängigkeit der Leitfähigkeit des Meßobjekts zurückzuführen ist, wird hier nur dann mitkompensiert, wenn die Meßspule und das Meßobjekt derselben Temperatur ausgesetzt sind. Insbesondere bei hohen Temperaturen ist diese Voraussetzung oftmals nicht erfüllt.

Der Erfindung liegt nun die Aufgabe zugrunde, einen Wirbelstromsensor der in Rede stehenden Art anzugeben, der bei einfacher Konstruktion und Auswerteschaltung eine zuverlässige Kompensation von Temperatureinflüssen sowohl auf den Realteil als auch auf den Imaginärteil der Impedanz der Meßspule ermöglicht.

Der erfindungsgemäße Wirbelstromsensor löst die voranstehende Aufgabe durch die Merkmale des Patentanspruches 1. Danach ist der eingangs genannte Wirbelstromsensor derart ausgebildet, daß eine ebenfalls mit Wechselstrom beaufschlagbare Kompensationsspule in unmittelbarer Nähe, d.h. in thermischem Kontakt, zu der Meßspule angeordnet ist, so daß die elektromagnetischen Felder der Kompensationsspule und der Meßspule orthogonal zueinander orientiert sind.

Erfindungsgemäß ist zunächst erkannt worden, daß zur Auswertung des Meßsignals eines Wirbelstromsensors in der Regel der Realteil $R_A$ und der Imaginärteil $X_A$ der Impedanz $Z_A$ der Meßspule für sich bekannt sein müsen, so daß auch der Phasenwinkel $\varphi$ der komplexen Impedanz $Z_A$ über den Quotienten aus Imaginärteil $X_A$ und Realteil $R_A$, nämlich über die Beziehung

$$\tan \varphi = X_A/R_A$$

bestimmbar ist. Dazu muß neben dem Temperatureinfluß auf den Realteil der komplexen Spulenimpedanz aber auch der Temperatureinfluß auf den Imaginärteil eliminiert werden. Erfindungsgemäß ist ferner erkannt worden, daß der Temperatureinfluß auf den Imaginärteil der Impedanz der Meßspule am einfachsten mit Hilfe einer Kompensationsspule ermittelt werden kann, die denselben Temperatureinflüssen ausgesetzt ist wie die Meßspule. Erfindungsgemäß wird daher vorgeschlagen, der Meßspule eine ebenfalls mit Wechselstrom beaufschlagbare Kompensationsspule zuzuordnen, die derart in thermischem Kontakt zu der Meßspule angeordnet ist, daß sich kein Temperaturgradient zwischen der Meßspule und der Kompensationsspule ausbilden kann. Erfindungsgemäß ist außerdem noch erkannt worden, daß sich mit Hilfe der Kompensationsspule der Temperatureinfluß auf den imaginärteil der Meßspulenimpedanz aber nur dann zuverlässig feststellen läßt, wenn das Meßobjekt keinen Einfluß auf die Impedanz der Kompensationsspule nimmt. Erfindungsgemäß wird daher vorgeschlagen, die Kompensationsspule so anzuordnen, daß die elektromagnetischen Felder der Kompensationsspule und der Meßspule orthogonal zueinander orientiert sind. Das Meßobjekt hat dann praktisch keinen Einfluß auf die Impedanz der Kompensationsspule, wenn der erfindungsgemäße Wirbelstromsensor so positioniert wird, daß sich die Anwesenheit des Meßobjekts maximal auf die Impedanz der Meßspule auswirkt. Subtrahiert man nun die komplexen Impedanzen der Meßspule und der Kompensationsspule durch geeignete schaltungstechnische Maßnahmen komponentenweise voneinander, so erhält man ausschließlich abstands- und materialabhängige Impedanzwerte. Die erfindungsgemäß vorgeschlagene Sensoranordnung ermöglicht auf diese Weise eine gute Kompensation der Temperatureinflüsse auf die Impedanz der Meßspule.

Es gibt nun grundsätzlich verschiedene Möglichkeiten zur konstruktiven Realisierung der Spulenanordnung des erfindungsgemäßen Wirbelstromsensors. In einer besonders vorteilhaften Variante weist die Meßspule einen ringförmigen Spulenkörper auf, um den dann - ähnlich wie die Wicklung eines Ringkerntrafos - die Kompensationsspule gewickelt ist. Die Kompensationsspule könnte außerdem noch in Form einer Ringspule ausgebildet sein, so daß die Meßspule wie ein Ringkern im Inneren der Kompensationsspule angeordnet ist. Die durch diese Spulenanordnung bedingte räumliche Nachbarschaft der Meßspule und der Kompensationsspule gewährleistet, daß sich die beiden Spulen auf derselben Temperatur befinden. Außerdem ist hier sichergestellt, daß das von der Kompensationsspule erzeugte elektromagnetische Feld orthogonal zu dem elektromagnetischen Feld der Meßspule orientiert ist.

Hinsichtlich der Stabilität der Spulenanordnung ist es von Vorteil, wenn die Meßspule auf einen Spulenträger gewickelt ist. Dabei kann es sich um einen Spulenträger aus einem dielektrischen Material, bpsw. aus Kunststoff, handeln. Der Spulenträger würde sich in diesem Falle nicht auf die Impedanz der Meßspule auswirken. Besonders vorteilhaft ist es jedoch, wenn der Spulenträger aus einem ferromagnetischen Material gefertigt ist, da er in diesem Falle wie ein Spulenkern signalverstärkend wirkt.

Im Hinblick auf eine einfache und zuverlässige Auswertung der Sensorsignale ist es von besonderem Vorteil, wenn die Impedanz der Meßspule und die Impedanz dei Kompensationsspule unter identischen Umgebungsbedingungen im wesentlichen gleich sind. Dies kann durch geeignete Wahl der Spulenparameter, wie z.B. Drahtdurchmesser, Windungszahl, Geometrie, etc., erreicht werden. Die Temperaturkompensation erfolgt dann durch einfache komponentenweise Subtraktion der komplexen Impedanzen von Meßspule und Kompensationsspule, ohne daß weiterreichende zusätzliche Berechnungen erforderlich sind.

Die auf diese Weise bereinigte Impedanz $Z_C$ der Meßspule bzw. der bereinigte Realteil Rc und der bereinigte Imaginärteil Xc können sowohl softwaremäßig, bspw. mit Hilfe eines entsprechen programmierten Microprozessors, als auch hardwaremäßig, d.h. schaltungstechnisch, ermittelt werden.

Für die schaltungstechnische Ermittlung der bereinigten Impedanz der Meßspule ist es besonders vorteilhaft, wenn die Meßspule und die Kompensationsspule an eine gemeinsame Spannungsquelle angeschlossen sind, die orthogonale Spannungskomponenten liefert. Dabei kann es sich in besonders vorteilhafter Weise um einen sin/cos-Generator handeln. Dann nämlich lassen sich Realteil und Imaginärteil der Spulenimpedanzen durch einfache Multiplikation der jeweiligen Ausgangssignale von Meßspule und Kompensationsspule mit der cos- bzw. sin-Komponente der Spannungsquelle ermitteln.

Dazu könnte die Auswerteschaltung jeweils zwei der Meßspule und der Kompensationsspule nachgeschaltete Multiplizierer umfassen, wobei jedem Multiplizierer die Ausgangsspannung der entsprechenden Spule und eine der beiden Spannungskomponenten der Spannungsquelle zugeführt werden. Am Ausgang des einen Multiplizierers wäre dann der Realteil der jeweiligen Spulenimpedanz abgreifbar, während am Ausgang des anderen Multiplizierers der entsprechende Imaginärteil abgreifbar wäre. Es kann vorteilhaft sein, den Multiplizierern jeweils einen Tiefpaßfilter nachzuschalten, um schaltungstechnisch bedingt auftretende, höherfrequente Anteile der Ausgangssignale der Multiplizierer auszublenden. Die Differenz zwischen den Realteilen und den Imaginärteilen der Spulenimpedanzen kann nun einfach mit Hilfe von den jeweiligen Multiplizierern nachgeschalteten Addierern ermittelt werden.

In einer anderen vorteilhaften Variante des erfindungsgemäßen Wirbelstromsensors könnte die Auswertung der Ausgangssignale der Meßspule und der Kompensationsspule auch mit Hilfe einer Brückenschaltung erfolgen. Dazu könnten die Meßspule und die Kompensationsspule ggf. zusammen mit Widerständen R1 und R2 an eine Brückenschaltung angeschlossen sein und in vorteilhafter Weise mit den orthogonalen Komponenten einer entsprechenden Wechselspannungsquelle versorgt werden.

Die Meßspule und die Kompensationsspule könnten aber auch mit Kapazitäten C1 und C2 zu einem Schwingkreis ergänzt werden. Schließlich wäre es auch denkbar, die Meßspule und die Kompensationsspule in einem freischwingenden Oszillator zu betreiben.

In einer besonders vorteilhaften Variante des erfindungsgemäßen Wirbelstromsensors weist die Meßspule eine geringe Ausdehnung in radialer Richtung auf, d.h. einen relativ kleinen Radius r.

Es ist nämlich erkannt worden, daß die auf Temperaturschwankungen zurückzuführenden Änderungen der Leitfähigkeit des Meßobjektmaterials zu Änderungen des Phasenwinkels $\varphi$ der komplexen Impedanz der Meßspule führen. Da der Phasenwinkel $\varphi$ aber auch durch das Meßobjekt, nämlich bspw. den Abstand zwischen dem Meßobjekt und der Meßspule, beeinflußt wird, ist eine vom Meßobjekt unabhängige Erfasssung des Temperatureinflusses äußerst schwierig. Die Bestimmung einer analytisch geschlossenen lösbaren Umkehrfunktion des Problems bei beliebiger Geometrie war bisher nicht möglich. Unter der Voraussetzung geringer Ausdehnung der Meßspule in radialer Richtung kann aber ein Näherungsmodell gefunden werden, das analytisch umkehrbar ist. Danach ist der Phasenwinkel $\varphi$ bzw. tan $\varphi$ eine reine Funktion der Leitfähigkeit bzw. der Temperatur des Meßobjekts und damit nicht mehr vom Meßabstand, dem Abstand zwischen dem Meßobjekt und dem Wirbelstromsensor, abhängig. Der geschätzte Meßabstand ist eine Funktion der Geometrie und des Meßobjektmaterials und ist direkt aus Realteil und Imaginärteil der Meßspulenimpedanz bestimmbar. Der abstandsabhängige Anteil von tan $\varphi$ kann nach der Berechnung des Meßabstands korrigiert werden. Damit werden die Fehler der Näherung kompensiert. Trotz der ursprünglichen fehlerbehafteten Näherung bleiben Meßabstand und Leitfähigkeit des Meßobjektmaterials also getrennt voneinander berechenbar. Bei ferromagnetischen Materialien, bei denen zusätzlich die relative Permeabilität des Meßobjektmateriais Einfluß auf tan $\varphi$ hat, kann nun immerhin noch das Verhältnis Permeabilität/Leitfähigkeit des Meßobjektmaterials berechnet werden, was für eine Materialidentifikation meist ausreicht. Auch hier hat die Temperatur des Meßobjekts keinen Einfluß auf die Berechnung des Meßabstands.

Unter der Voraussetzung, daß der Phasenwinkel $\varphi$ bzw. tan $\varphi$ temperaturunabhängig bestimmt werden können, lassen sich nun mit Hilfe des erfindungsgemäßen Wirbelstromsensors ganz unterschiedliche Meßgrößen ermitteln. In diesem Zusammenhang ist es von Vorteil, wenn die Auswerteschaltung einen programmierbaren Microprozessor umfaßt.

So kann bspw. unter Zugrundelegung der entsprechenden physikalischen Zusammenhänge und bei Kenntnis von sensorspezifischen Konstanten der Abstand h zwischen einem nicht ferromagnetischen Meßobjekt und dem Wirbelstromsensor bzw. der Meßspule bestimmt werden als

$$h = k1 \ln[k2/X_c \, f(\tan \varphi, \omega, r)],$$

Des weiteren kann die Leitfähigkeit $\sigma$ eines Meßobjekts bestimmt werden als

$$\sigma = f(k3 \tan^2\varphi/\omega r^2).$$

Wie bereits eingangs erwähnt, kann der erfindungsgemäße Wirbelstromsensor auch zur Bestimmung der Dicke d einer dünnen Folie eingesetzt werden. Bei bekannter Leitfähigkeit $\sigma$ der Folie ergibt sich die Dicke d als

$$d = f(k4 \tan\varphi/r\omega\sigma).$$

Außerdem kann auch der Abstand h zwischen dem Wirbelstromsensor bzw. der Meßspule und einer dünnen Folie ermittelt werden, wobei die Dicke d dieser Folie allerdings kleiner als die Wirbelstromeindringtiefe der Meßspule sein sollte. h ergibt sich dann als

$$h = f(k5 \tan^2\varphi/(1+\tan^2\varphi)X_c).$$

Schließlich kann mit dem erfindungsgemäßen Wirbelstromsensor auch der Abstand h zwischen einem ferromagnetischen Meßobjekt und dem Wirbelstromsensor bzw. der Meßspule bestimmt werden. h ergibt sich in diesem Falle als

$$h = k1 \ln[k2/X_c \, f(\mu_r/\sigma, \omega, r)],$$

wobei

$$\mu_r/\sigma = (k6 \, r\sqrt{2} \, (\tan\varphi + \sqrt{2+\tan^2\varphi}))^2.$$

In den voranstehenden Formeln sind mit k1 bis k6 vorab bestimmbare Konstanten bezeichnet. $\omega$ stellt die Kreisfrequenz der Speisespannung für die Meßspule und die Kompensationsspule dar.

Wird als Spannungsquelle ein sog. VCO (Voltage controlled Oscillator) verwendet, so kann die Kreisfrequenz $\omega$ der Speisespannung so geregelt werden, daß der bereinigte Imaginärteil der Impedanz gleich null ist ($X_c = 0$), so daß also auch tan $\varphi$ gleich null ist. Dadurch vereinfacht sich die Bestimmung der voranstehend aufgeführten Meßgrößen ganz erheblich.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels werden auch im allgemeinen bevorzugte Ausgestaltungen und Weiterbildungen der Lehre erläutert. In der Zeichnung zeigt

Fig. 1    den konstruktiven Aufbau eines erfindungsgemäßen Wirbelstromsensors und

Fig. 2    ein Ausführungsbeispiel einer Meßschaltung mit einem erfindungsgemäßen Wirbelstromsensor.

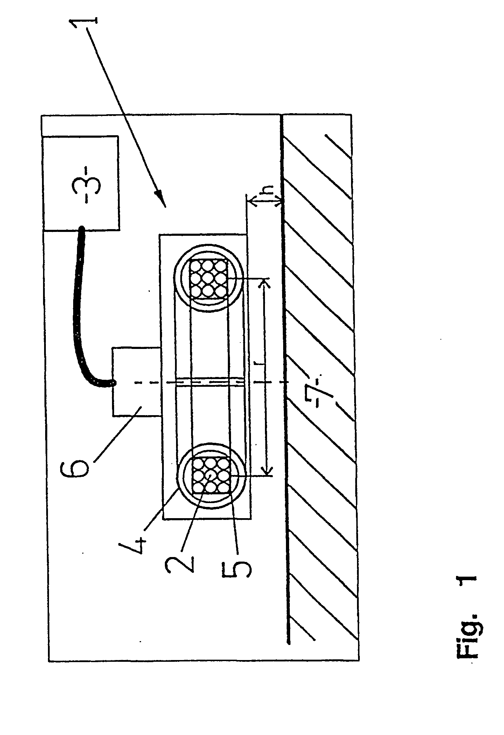

In Fig. 1 ist ein Wirbelstromsensor 1 dargestellt, der eine mit Wechselstrom beaufschlagbare Meßspule 2 und eine Auswerteschaltung 3 umfaßt.

Erfindungsgemäß ist in unmittelbarer Nähe der Meßspule 2 eine ebenfalls mit Wechselstrom beaufschlagbare Kompensationsspule 4 angeordnet. Diese Kompensationsspule 4 ist konstruktiv so ausgestaltet und bezüglich der Meßspule 2 so ausgerichtet, daß die elektromagnetischen Felder der Kompensationsspule 4 und der Meßspule 2 orthogonal zueinander orientiert sind. Durch die Anordnung der Kompensationsspule 4 in unmittelbarer Nähe der Meßspule 2 stehen die beiden Spulen 2 und 4 in thermischem Kontakt, so daß sich praktisch kein Temperaturgradient zwischen diesen Spulen 2 und 4 ausbilden kann.

In dem hier dargestellten Ausführungsbeispiel weist die Meßspule 2 einen ringförmigen Spulenkörper auf, um den die Kompensationsspule 4 nach Art der Wicklung eines Ringkerntrafos gewickelt ist. Dabei ist die Kompensationsspule 4 in Form einer Ringspule ausgebildet. Die Meßspule 2 ist also wie ein Ringkern im Inneren der Kompensationsspule 4 angeordnet.

An dieser Stelle sei nochmals darauf hingewiesen, daß die räumliche Konfiguration der Spulenanordnung sicherstellen soll, daß auf beide Spulen, die Meßspule und die Kompensationsspule, dieselben Umgebungsbedingungen wirken, als da sind Temperatur, Temperaturgradient, Schirmungseinfluß, Feuchtigkeit, etc..

Die Meßspule 2 ist in dem hier dargestellten Ausführungsbeispiel auf einen Spulenträger 5 in Form eines Kunststoffrings aufgewickelt, so daß es sich hier um eine Luftspule handelt. Der Spulenträger 5 könnte aber auch aus einem ferromagnetischen Material gefertigt sein und dadurch wie ein Spulenkern wirken, der das Ausgangssignal der Meßspule 2 verstärkt.

Im Falle des in Fig. 1 dargestellten Wirbelstromsensors 1 sind neben den Orientierungen der elektromagnetischen Felder der Meßspule 2 und der Kompensationsspule 4 auch die Spulenimpedanzen aufeinander abgestimmt. Die Impedanz der Meßspule 2 und die Impedanz der Kompensationsspule 4 sollten nämlich unter identischen Umgebungsbedingungen im wesentlichen gleich sein. Diese Angleichung der Spulenimpedanzen kann einfach durch entsprechende Wahl der Spulenparameter erreicht werden, nämlich des Drahtmaterials und -durchmessers, der Windungszahl, der Geometrie, etc.. Wesentlich ist, daß die Real- und Imaginärteile der beiden Spulenimpedanzen paarweise gleich sind.

In dem hier dargestellten Ausführungsbeispiel ist die Spulenanordnung in einem Gehäuse 6 angeordnet. Als Materialien für das Gehäuse 6 kommen Kunststoff, Keramik, ferromagnetischer oder auch nicht ferromagnetischer Stahl in Frage.

Der Radius r der Meßspule 2 des hier dargestellten Wirbelstromsensors 1 ist so dimensioniert, daß der Phasenwinkel der Impedanz der Meßspule 2 bzw. tan eine reine Funktion der Leitfähigkeit des jeweiligen Meßobjekts 7 ist und nicht vom Meßabstand h, d.h. dem Abstand zwischen dem Wirbelstromsensor 1 und der Oberfläche des Meßobjekts 7 abhängt.

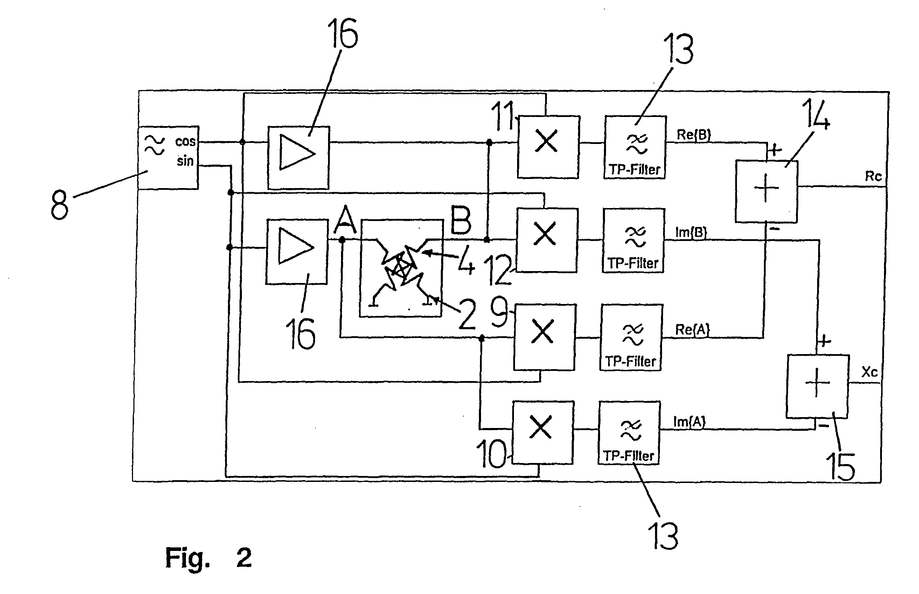

Die in Fig. 2 dargestellte Meßschaltung für einen erfindungsgemäßen Wirbelstromsensor umfaßt eine Spannungsquelle, die hier in Form eines Wechselspannungsgenerators (VCO) 8 mit sin- und cos-Ausgang und variierbarer Kreisfrequenz realisiert ist. Dieser VCO 8 erzeugt die Speisespannung für die Meßspule 2 und die Kompensationsspule 4.

An dem Ausgang A der Spulenanordnung ist die Impedanz der Meßspule 2 abgreibar, so wie an dem Ausgang B der Spulenanordnung die Impedanz der Kompensationsspule 4 abgreifbar ist. Den Ausgängen A und B sind jeweils zwei Multiplizierer 9 und 10 bzw. 11 und 12 nachgeschaltet. Die Multiplizierer 9 und 11 verknüpfen jeweils die Impedanzen der Meßspule 2 bzw. der Kompensationsspule 4 mit der cos-Komponente der Speisespannung, so daß am Ausgang der Multiplizierer 9 und 11 jeweils der Realteil der entsprechenden Impedanz anliegt. Die Multiplizierer 10 und 12 verknüpfen dagegen die Impedanzen der Meßspule 2 und der Kompensationsspule 4 mit der sin-Komponente der Speisespannung, so daß an den Ausgängen dieser Multiplizierer 10 und 12 jeweils der Imaginärteil der entsprechenden Impedanz anliegt.

Angemerkt sei an dieser Stelle, daß sich konstruktionsbedingte Unterschiede zwischen den anfänglichen "Leerlauf"-Impedanzen der Meßspule und der Kompensationsspule schaltungstechnisch durch unterschiedliche Verstärkungsfaktoren hinter den Multiplizierern ausgleichen lassen. Den Multiplizierern 9 bis 11 nachgeschaltet sind hier Tiefpaßfilter 13, die schaltungsbedingt auftretende, höherfrequente Signalanteile ausblenden sollen, im Rahmen der Auswertung der erfaßten Spulenimpedanzen aber keine Rolle spielen.

Die Ausgangssignale der Multiplizierer 9 und 11, die im wesentlichen die Realteile der Impedanz der Meßspule 2 und der Impedanz der Kompensationsspule 4 darstellen, werden zur Differenzbildung einem Addierer 14 zugeführt. Das Ausgangssignal dieses Addierers 14 stellt nun den bereinigten Realteil der Impedanz der Meßspule 2 dar. Dementsprechend ist ein Addierer 15 vorgesehen, dem die Ausgänge der Multiplizierer 10 und 12 zugeführt sind, also die Imaginärteile der Impedanz der Meßspule 2 und der Impedanz der Kompensationsspule 4. Das Ausgangssignal des Addierers 15 stellt dementsprechend den bereinigten Imaginärteil der Impedanz der Meßspule dar.

Um zu verhindern, daß sich die Ausgangssignale der Meßspule 2 und der Kompensationsspule 4 der sin- und cos-Komponente der Speisespannung überlagern sind zwischen die Spannungsquelle 8 und die Meßspule 2 bzw. die Kompensationsspule 4 Puffer 16 geschaltet, die eine derartige Rückkopplung verhindern.

In Verbindung mit Fig. 2 sei abschließend noch angemerkt, daß hier nur eine Möglichkeit der schaltungstechnischen Auswertung der Impedanzen der Meßspule und der Kompensationsspule dargestellt ist. Eine Auswertung kann bspw. auch mit Hilfe einer geeigneten Brückenschaltung oder Schwingkreisschaltung erfolgen. Schließlich könnten die Meßspule und die Kompensationsspule auch in einem freischwingenden Oszillator betrieben werden.

**Patentansprüche**

1. Wirbelstromsensor (1) mit einer Auswerteschaltung (3), mit mindestens einer Meßspule (2) und mit mindestens einer Kompensationsspule (4), wobei die Meßspule (2) und die Kompensationsspule (4) mit Wechselstrom beaufschlagbar sind und die Kompensationsspule (4) in unmittelbarer Nähe zu der Meßspule (2) angeordnet ist, so daß die elektromagnetischen Felder der Kompensationsspule (4) und der Meßspule (2) orthogonal zueinander orientiert sind,
   **dadurch gekennzeichnet, daß** die Meßspule (2) einen ringförmigen Spulenkörper aufweist und daß die Kompensationsspule (4) um den Spulenkörper der Meßspule (2) gewickelt ist, so daß die Kompensationsspule (4) in thermischem Kontakt zu der Meßspule (2) steht und die Meßspule (2) wie ein Ringkern im Innern der Kompensationsspule (4) angeordnet ist.

2. Wirbelstromsensor nach Anspruch 1, **dadurch gekennzeichnet, daß** die Kompensationsspule (4) in Form einer Ringspule ausgebildet ist.

3. Wirbelstromsensor nach einem der Ansprüche 1 oder 2, **dadurch gekennzeichnet, daß** die Meßspule (2) auf einen Spulenträger (5) gewickelt ist, wobei der Spulenträger (5) aus einem dielektrischen Material, vorzugsweise aus Kunststoff, oder aus einem ferromagnetischen Material gebildet sein kann.

4. Wirbelstromsensor nach einem der Ansprüche 1 bis 3, **dadurch gekennzeichnet, daß** die Impedanz der Meßspule ($Z_A = R_A + X_A$) und die Impedanz der Kompensationsspule ($Z_B = R_B + X_B$) unter identischen Umgebungsbedingungen im wesentlichen gleich sind.

5. Wirbelstromsensor nach einem der Ansprüche 1 bis 4, **dadurch gekennzeichnet, daß** die Auswerteschaltung (3) Mittel umfaßt zum Ermitteln des bereinigten Realteils $R_C$ der Impedanz der Meßspule als Differenz zwischen den Realteilen der Impedanzen der Meßspule und der Kompensationsspule ($R_C = R_B - R_A$) und daß die Auswerteschaltung (3) Mittel umfaßt zum Ermitteln des bereinigten Imaginärteils $X_C$ als Differenz zwischen den Imaginärteilen der Impedanzen der Meßspule und der Kompensationsspule ($X_C = X_B - X_A$).

6. Wirbelstromsensor nach einem der Ansprüche 1 bis 5, **dadurch gekennzeichnet, daß** die Meßspule (2) und die Kompensationsspule (4) an eine Spannungsquelle (4) angeschlossen sind, die orthogonale Spannungskomponenten liefert, vorzugsweise an einen sin/cos-Generator, wobei die Auswerteschaltung (3) jeweils zwei der Meßspule (2) und der Kompensationsspule (4) nachgeschaltete Multiplizierer (9 bis 12) umfassen kann und wobei jedem Multiplizierer (9 bis 12) die Ausgangsspannung der entsprechenden Spule (2, 4) und eine der beiden Spannungskomponenten der Spannungsquelle (8) zugeführt werden, so daß an dem Ausgang des einen Multiplizierers (9, 11) der Realteil $R_A$ bzw. $R_B$ der Spulenimpedanz abgreifbar ist, während an dem Ausgang des anderen Multiplizierers (10, 12) der Imaginärteil $X_A$ bzw. $X_B$ der Spulenimpedanz abgreifbar ist.

7. Wirbelstromsensor nach Anspruch 6, **dadurch gekennzeichnet, daß** den Multiplizierern (9 bis 12) Tiefpaßfilter (13) nachgeschaltet sind, wobei den beiden Multiplizierern (9 bis 12), an deren Ausgängen die Realteile bzw. die Imaginärteile der Spulenimpedanzen abgreifbar sind, ein Addierer (14, 15) nachgeschaltet sein kann.

8. Wirbelstromsensor nach einem der Ansprüche 1 bis 6, **dadurch gekennzeichnet, daß** die Meßspule und die Kompensationsspule an eine Brückenschaltung angeschlossen sind, wobei die Brückenschaltung Widerstände R1 und R2 umfaßt.

9. Wirbelstromsensor nach einem der Ansprüche 1 bis 6, **dadurch gekennzeichnet, daß** die Meßspule und die Kompensationsspule mit Kapazitäten C1 und C2 einen Schwingkreis bilden oder daß die Meßspule und die Kompensationsspule in einem freischwingenden Oszillator betrieben werden.

10. Wirbelstromsensor nach einem der Ansprüche 1 bis 9, **dadurch gekennzeichnet, daß** die Auswerteschaltung (3) einen vorzugsweise programmierbaren Mikroprozessor umfaßt zur Auswertung des bereinigten Realteils $R_C$ und des bereinigten Imaginärteils $X_C$ der Impedanz der Meßspule.

**11.** Verfahren zum Betreiben eines Wirbelstromsensors nach einem der Ansprüche 1 bis 10, **dadurch gekennzeichnet, daß** jeweils der Realteil und der Imaginärteil der Impedanzen der Meßspule (2) und der Kompensationsspule (4) ermittelt werden, daß durch Subtraktion der Realteile und der Imaginärteile der bereinigte Realteil

$$R_C = R_B - R_A$$

und der bereinigte Imaginärteil

$$X_C = X_B - X_A$$

der Impedanz der Meßspule (2) ermittelt werden.

**12.** Verfahren nach Anspruch 11, **dadurch gekennzeichnet, daß** durch Division des bereinigten Imaginärteils und des bereinigten Realteils der Phasenwinkel $\varphi$ der Impedanz der Meßspule (2) ermittelt wird aus

$$\tan \varphi = X_C / R_C.$$

**13.** Verfahren nach Anspruch 12, **dadurch gekennzeichnet, daß** der Abstand h zwischen einem nicht ferromagnetischen Meßobjekt (7) und dem Wirbelstromsensor (1) bzw.der Meßspule (2) bestimmt wird als

$$h = k1 \ln [k2/X_C \, f(\tan \varphi, \omega, r)] \,,$$

wobei k1 und k2 vorab bestimmbare Konstanten sind und $\omega$ die Kreisfrequenz der Speisespannung für die Meßspule (2) und die Kompensationsspule (4) ist.

**14.** Verfahren nach einem der Ansprüche 12 oder 13, **dadurch gekennzeichnet, daß** die Leitfähigkeit $\sigma$ eines Meßobjekts (7) bestimmt wird als

$$\sigma = f (k3 \tan^2 \varphi / \omega \, r^2),$$

wobei k3 eine vorab bestimmbare Konstante ist und $\omega$ die Kreisfrequenz der Speisespannung für die Meßspule (2) und die Kompensationsspule (4) ist.

**15.** Verfahren nach einem der Ansprüche 12 oder 13 zur Bestimmung der Dicke d einer dünnen Folie mit bekannter Leitfähigkeit $\sigma$, **dadurch gekennzeich-**

**net, daß** die Dicke d bestimmt wird als

$$d = f(k4 \tan\varphi/r \, \omega \, \sigma).$$

wobei k4 eine vorab bestimmbare Konstante ist und $\omega$ die Kreisfrequenz der Speisespannung für die Meßspule (2) und die Kompensationsspule (4) ist.

**16.** Verfahren nach einem der Ansprüche 12 oder 13 zur Bestimmung des Abstands h zwischen dem Wirbelstromsensor (1) bzw. der Meßspule (2) und einer dünnen Folie, deren Dicke d kleiner ist als die Wirbelstromeindringtiefe der Meßspule (2), **dadurch gekennzeichnet, daß** der Abstand h bestimmt wird als

$$h = f (k5 \tan^2 \varphi / (1 + \tan^2 \varphi X_c),$$

wobei k5 eine vorab bestimmbare Konstante ist.

**17.** Verfahren nach Anspruch 12, **dadurch gekennzeichnet, daß** der Abstand h zwischen einem ferromagnetischen Meßobjekt und dem Wirbelstromsensor (1) bzw. der Meßspule (2) bestimmt wird als

$$h = k1 \ln[k2/X_C \, f (\mu_r/\sigma, \omega, r)],$$

wobei

$$\mu_r/\sigma = (k6 \, r \, \sqrt{2} \, (\tan \varphi + \sqrt{2 + \tan^2 \varphi}))^2$$

wobei k1, k2 und k6 vorab bestimmbare Konstanten sind, $\mu_r$ die relative Permeabilität des Meßobjekts ist und die Kreisfrequenz der Speisespannung für die Meßspule (2) und die Kompensationsspule (4) ist, wobei die Kreisfrequenz der Speisespannung so geregelt wird, daß der bereinigte Imaginärteil $X_C$ = 0 wird, so daß $\tan \varphi = 0$.

**18.** Verfahren nach einem der Ansprüche 12 bis 17, **dadurch gekennzeichnet, daß** nach der Bestimmung des Abstandes h zwischen Meßobjekt (7) und Wirbelstromsensor (1) bzw. Meßspule (2) der abstandsabhängige Anteil von $\tan \varphi$ korrigiert wird und daß der ermittelte Abstand h und/oder die ermittelte Leitfähigkeit $\sigma$ ggf. linearisiert werden.

**Claims**

**1.** An eddy current sensor (1) with an evaluation circuit (3) comprising at least one measurement coil (2) and at least one compensation coil (4), wherein the measurement coil (2) and the compensation coil (4) may be supplied with an alternating current and the compensation coil (4) is arranged in the immediate vicinity of the measuring coil (2), such that the electromagnetic fields of the compensation coil (4) and measurement coil (2) are oriented orthogonally relative to one another, **characterised in that** the measurement coil (2) comprises an annular coil former and **in that** the compensation coil (4) is wound around the coil former of the measurement coil (2) in such a manner that the compensation coil (4) is in thermal contact with measurement coil (2) and the measurement coil (2) is arranged like a ring core within the compensation coil (4).

2. An eddy current sensor according to claim 1, **characterised in that** the compensation coil (4) takes the form of a ring coil.

3. An eddy current sensor according to any one of claims 1 or 2, **characterised in that** the measurement coil (2) is wound on a coil frame (5), wherein the coil frame (5) may be formed from a dielectric material, preferably from plastics, or from a ferromagnetic material.

4. An eddy current sensor according to any one of claims 1 to 3, **characterised in that**, under identical ambient conditions, the impedance of the measurement coil ($Z_A = R_A + X_A$) and the impedance of the compensation coil ($Z_B = R_B + X_B$) are substantially equal.

5. An eddy current sensor according to any one of claims 1 to 4, **characterised in that** the evaluation circuit (3) comprises means for determining the corrected real part $R_C$ of the impedance of the measurement coil as the difference between the real parts of the impedances of the measurement coil and the compensation coil ($R_C = R_B - R_A$) and **in that** the evaluation circuit (3) comprises means for determining the corrected imaginary part $X_C$ as the difference between the imaginary parts of the impedances of the measurement coil and the compensation coil ($X_C = X_B - X_A$).

6. An eddy current sensor according to any one of claims 1 to 5, **characterised in that** the measurement coil (2) and the compensation coil (4) are connected to a voltage source (4)[sic], which supplies orthogonal voltage components, preferably to a sin/cos generator, wherein the evaluation circuit (3) may comprise in each case two multipliers (9 to 12) downstream from the measurement coil (2) and the compensation coil (4) and wherein each multiplier (9 to 12) is supplied with the output voltage of the corresponding coil (2, 4) and one of the two voltage components of the voltage source (8), such that the real part $R_A$ or $R_B$ of the coil impedance may be tapped at the output from one multiplier (9, 11), while the imaginary part $X_A$ or $X_B$ of the coil impedance may be tapped at the output from the other multiplier (10, 12).

7. An eddy current sensor according to claim 6, **characterised in that** low-pass filters (13) are connected downstream from the multipliers (9 to 12), wherein an adder (14, 15) may be connected downstream from the two multipliers (9 to 12), at the outputs of which multipliers the real or imaginary parts of the coil impedances may be tapped.

8. An eddy current sensor according to any one of claims 1 to 6, **characterised in that** the measurement coil and the compensation coil are connected to a bridge circuit, wherein the bridge circuit comprises resistors R1 and R2.

9. An eddy current sensor according to any one of claims 1 to 6, **characterised in that** the measurement coil and the compensation coil form an oscillating circuit with capacitors C1 and C2 or **in that** the measurement coil and the compensation coil are operated in a freely oscillating oscillator.

10. An eddy current sensor according to any one of claims 1 to 9, **characterised in that** the evaluation circuit (3) comprises a preferably programmable microprocessor for evaluating the corrected real part $R_C$ and the corrected imaginary part $X_C$ of the impedance of the measurement coil.

11. A method for operating an eddy current sensor according to any one of claims 1 to 10, **characterised in that** the real part and the imaginary part of the impedance of the measurement coil (2) and of the compensation coil (4) are in each case determined, **in that** the corrected real part

$$R_C = R_B - R_A$$

and the corrected imaginary part

$$X_C = X_B - X_A$$

of the impedance of the measurement coil (2) are determined by subtraction of the real parts and the imaginary parts.

12. A method according to claim 11, **characterised in that** the phase angle $\varphi$ of the impedance of the measurement coil (2) is determined by division of the corrected imaginary part and the corrected real part from

$$\tan \varphi = X_C/R_C.$$

**13.** A method according to claim 12, **characterised in that** the distance h between a non-ferromagnetic measured object (7) and the eddy current sensor (1) or the measurement coil (2) is determined as

$$h = k1 \ln [ k2/X_C \, f \, (\tan (\varphi, \omega, r)],$$

wherein k1 and k2 are previously determinable constants and $\omega$ is the angular frequency of the supply voltage for the measurement coil (2) and the compensation coil (4).

**14.** A method according to any one of claims 12 or 13, **characterised in that** the conductivity $\sigma$ of a measured object (7) is determined as

$$\sigma = f \, (k3 \tan^2 \varphi \, / \, \omega \, r^2),$$

wherein k3 is a previously determinable constant and $\omega$ is the angular frequency of the supply voltage for the measurement coil (2) and the compensation coil (4).

**15.** A method according to any one of claims 12 or 13 for determining the thickness d of a thin film of known conductivity $\sigma$, **characterised in that** the thickness d is determined as

$$d = f \, (k4 \tan \varphi \, / \, r \, \omega \, \sigma),$$

wherein k4 is a previously determinable constant and $\omega$ is the angular frequency of the supply voltage for the measurement coil (2) and the compensation coil (4).

**16.** A method according to any one of claims 12 or 13 for determining the distance h between the eddy current sensor (1) or the measurement coil (2) and a thin film, the thickness d of which is less than the eddy current penetration depth of the measurement coil (2), **characterised in that** the distance h is determined as

$$h = f(k5 \tan^2 \varphi \, / \, (1+\tan^2\varphi)X_C),$$

wherein k5 is a previously determinable constant.

**17.** A method according to claim 12, **characterised in that** the distance h between a ferromagnetic measured object and the eddy current sensor (1) or the measurement coil (2) is determined as

$$h = k1 \ln [k2/X_C \, f \, (\mu_r \, / \, \sigma, \, \omega, \, r)],$$

wherein

$$\mu_r/\sigma = (k6 \, r \, \sqrt{2} \, (\tan \varphi + \sqrt{2+\tan^2 \varphi}))^2$$

wherein k1, k2 and k6 are previously determinable constants, $\mu_r$ is the relative permeability of the measured object and [sic] is the angular frequency of the supply voltage for the measurement coil (2) and the compensation coil (4), wherein the angular frequency of the supply voltage is controlled such that the corrected imaginary part $X_C$ becomes equal to 0, such that $\tan \varphi = 0$.

**18.** A method according to any one of claims 12 to 17, **characterised in that**, once the distance h between the measured object (7) and the eddy current sensor (1) or measurement coil (2) has been determined, the distance-dependent portion of $\tan \varphi$ is corrected and **in that** the determined distance h and/or the determined conductivity $\sigma$ are optionally linearised.

## Revendications

**1.** Capteur à courants de Foucault (1) avec un circuit d'exploitation (3), avec au moins une bobine de mesure (2) et avec au moins une bobine de compensation (4), la bobine de mesure (2) et la bobine de compensation (4) pouvant être soumises à un courant alternatif et la bobine de compensation (4) étant disposée au voisinage immédiat de la bobine de mesure (2) de telle manière que les champs électromagnétiques de la bobine de compensation (4) et de la bobine de mesure (2) sont orientés orthogonalement les uns aux autres,
**caractérisé en ce que** la bobine de mesure (2) présente un corps de bobine annulaire et que la bobine de compensation (4) est enroulée autour du corps de bobine de la bobine de mesure (2) de telle manière que la bobine de compensation (4) est en contact thermique avec la bobine de mesure (2) et que la bobine de mesure (2) est disposée dans l'intérieur de la bobine de compensation (4) comme un noyau annulaire.

**2.** Capteur à courants de Foucault selon la revendication 1,
**caractérisé en ce que** la bobine de compensation (4) est réalisée sous forme d'une bobine annulaire.

**3.** Capteur à courants de Foucault selon l'une des revendications 1 et 2,
**caractérisé en ce que** la bobine de mesure (2) est enroulée sur un support de bobine (5), le support de bobine (5) pouvant être formé d'un matériau diélectrique, de préférence de matière synthétique, ou d'un matériau ferromagnétique.

4. Capteur à courants de Foucault selon l'une des revendications 1 à 3, **caractérisé en ce que** l'impédance de la bobine de mesure ($Z_A = R_A + X_A$) et l'impédance de la bobine de compensation ($Z_B = R_B + X_B$) sont essentiellement égales dans des conditions d'environnement identiques.

5. Capteur à courants de Foucault selon l'une des revendications 1 à 4, **caractérisé en ce que** le circuit d'exploitation (3) comprend des moyens pour déterminer la composante réelle corrigée $R_C$ de l'impédance de la bobine de mesure en tant que différence entre les composantes réelles des impédances de la bobine de mesure et de la bobine de compensation ($R_C = R_B - R_A$) et que le circuit d'exploitation (3) comprend des moyens pour déterminer la composante imaginaire corrigée $X_C$ en tant que différence entre les composantes imaginaires de la bobine de mesure et de la bobine de compensation ($X_C = X_B - X_A$).

6. Capteur à courants de Foucault selon l'une des revendications 1 à 5, **caractérisé en ce que** la bobine de mesure (2) et la bobine de compensation (4) sont raccordées à une source de tension (8) qui délivre des composantes de tension orthogonales, de préférence à un générateur sin/cos, le circuit d'exploitation (3) pouvant comprendre respectivement deux multiplicateurs (9 à 12) placés en aval de la bobine de mesure (2) et de la bobine de compensation (4) et la tension de sortie de la bobine (2, 4) correspondante et l'une des deux composantes de tension de la source de tension (8) étant amenées à chaque multiplicateur (9 à 12), de telle sorte que la composante réelle $R_A$ ou respectivement $R_B$ de l'impédance de la bobine peut être prélevée à la sortie de l'un des multiplicateurs (9, 11) tandis que la composante imaginaire $X_A$ ou respectivement $X_B$ de l'impédance de la bobine peut être prélevée à la sortie de l'autre multiplicateur (10, 12).

7. Capteur à courants de Foucault selon la revendication 6, **caractérisé en ce que** des filtres passe-bas (13) sont placés en aval des multiplicateurs (9 à 12), un additionneur (14, 15) pouvant être placé en aval des deux multiplicateurs (9 à 12) aux sorties desquels peuvent être prélevées les composantes réelles ou respectivement les composantes imaginaires des impédances des bobines.

8. Capteur à courants de Foucault selon l'une des revendications 1 à 6, **caractérisé en ce que** la bobine de mesure et la bobine de compensation sont raccordées à un circuit en pont, le circuit en pont comprenant des résistances R1 et R2.

9. Capteur à courants de Foucault selon l'une des revendications 1 à 6, **caractérisé en ce que** la bobine de mesure et la bobine de compensation forment, avec des condensateurs C1 et C2, un circuit oscillant ou que la bobine de mesure et la bobine de compensation sont exploitées dans un oscillateur libre.

10. Capteur à courants de Foucault selon l'une des revendications 1 à 9, **caractérisé en ce que** le circuit d'exploitation (3) comprend un microprocesseur, de préférence programmable, pour l'exploitation de la composante réelle corrigée $R_C$ et de la composante imaginaire corrigée $X_C$ de l'impédance de la bobine de mesure.

11. Procédé d'exploitation d'un capteur à courants de Foucault selon l'une des revendications 1 à 10, **caractérisé en ce que** respectivement la composante réelle et la composante imaginaire des impédances de la bobine de mesure (2) et de la bobine de compensation (4) sont déterminées, que la composante réelle corrigée

$$R_C = R_B - R_A$$

et la composante imaginaire corrigée

$$X_C = X_B - X_A$$

de l'impédance de la bobine de mesure (2) sont déterminées respectivement par soustraction des composantes réelles et des composantes imaginaires.

12. Procédé selon la revendication 11, **caractérisé en ce que** l'angle de phase $\varphi$ de l'impédance de la bobine de mesure (2) est déterminé par

$$\tan \varphi = X_C / R_C$$

par division de la composante imaginaire corrigée et de la composante réelle corrigée.

13. Procédé selon la revendication 12, **caractérisé en ce que** la distance h entre un objet de mesure (7) non ferromagnétique et le capteur à courants de Foucault (1) ou respectivement la bobine de mesure (2) est déterminée en tant que

$$h = k1 \ln [k2/X_C f (\tan \varphi, \omega, r)],$$

k1 et k2 étant des constantes pouvant être prédéterminées et $\omega$ étant la fréquence angulaire de la tension d'alimentation pour la bobine de mesure (2) et la bobine de compensation (4).

**14.** Procédé selon l'une des revendications 12 et 13, **caractérisé en ce que** la conductibilité $\sigma$ d'un objet de mesure (7) est déterminée en tant que

$$\sigma = f (k3 \tan^2 \varphi/\omega r^2),$$

k3 étant une constante pouvant être prédéterminée et $\omega$ étant la fréquence angulaire de la tension d'alimentation pour la bobine de mesure (2) et la bobine de compensation (4).

**15.** Procédé selon l'une des revendications 12 et 13 pour la détermination de l'épaisseur d d'une feuille mince de conductibilité $\sigma$ connue, **caractérisé en ce que** l'épaisseur d est déterminée en tant que

$$d=f(k4 \tan \varphi/r \omega \sigma),$$

k4 étant une constante pouvant être prédéterminée et $\omega$ étant la fréquence angulaire de la tension d'alimentation pour la bobine de mesure (2) et la bobine de compensation (4).

**16.** Procédé selon l'une des revendications 12 et 13 pour la détermination de la distance h entre le capteur à courants de Foucault (1) ou respectivement la bobine de mesure (2) et une feuille mince dont l'épaisseur d est inférieure à la profondeur de pénétration des courants de Foucault de la bobine de mesure (2),
**caractérisé en ce que** la distance h est déterminée en tant que

$$h = f (k5 \tan^2 \varphi / (1+\tan^2 \varphi) X_C),$$

k5 étant une constante pouvant être prédéterminée.

**17.** Procédé selon la revendication 12,
**caractérisé en ce que** la distance h entre un objet de mesure non ferromagnétique et le capteur à courants de Foucault (1) ou respectivement la bobine de mesure (2) est déterminée en tant que

$$h = k1 \ln [k2/X_C f (\mu_r/\sigma, \omega, r)]$$

avec

$$\mu_r/\sigma = (k6 \, r \, \sqrt{2} \, (\tan \varphi + \sqrt{2+\tan^2 \varphi}))^2,$$

k1, k2 et k6 étant des constantes pouvant être prédéterminées, $\mu_r$ étant la perméabilité relative de l'objet de mesure et $\omega$ étant la fréquence angulaire de la tension d'alimentation pour la bobine de mesure (2) et la bobine de compensation (4), la fréquence angulaire de la tension d'alimentation étant réglée de telle manière que la composante imaginaire corrigée $X_C$ devient = 0 de sorte que $\tan \varphi = 0$.

**18.** Procédé selon l'une des revendications 12 à 17, **caractérisé en ce que**, après détermination de la distance h entre l'objet de mesure (7) et le capteur à courants de Foucault (1) ou respectivement la bobine de mesure (2), la composante dépendant de la distance de $\tan \varphi$ est corrigée et que la distance h déterminée et/ou la conductibilité $\sigma$ déterminée sont le cas échéant linéarisées.

Fig. 1

EP 0 916 076 B1

Fig. 2

EP 0 916 076 B1